# EUROPEAN PATENT SPECIFICATION

(11) **EP 1 815 405 B1**
(45) Date of publication and mention of the grant of the patent: **30.01.2013**
(21) Application number: 05782437.7
(22) Date of filing: 05.08.2005
(51) Int. Cl.: B42C 11/00, B42B 7/00, B41F 17/02, B42C 19/02

(54) **A SYSTEM FOR AND A METHOD OF PRODUCING A BOOK ON DEMAND**
SYSTEM UND VERFAHREN ZUR HERSTELLUNG EINES BUCHES AUF ANFRAGE
SYSTEME ET PROCEDE DE PRODUCTION D'UN LIVRE A LA DEMANDE

(30) Priority: 09.08.2004 US 914681
(43) Date of publication of application: 08.08.2007
(73) Proprietor: ePAC Technologies, San Leandro, CA 94579 (US)
(72) Inventor: DOBROVOLSKY, Sasha, Berkeley, CA 94710 (US)
(74) Representative: Lawrence, John
(86) International application number: PCT/US2005/027817
(87) International publication number: WO 2006/020501

(56) References cited:
- EP-A- 0 553 870
- EP-A- 1 074 397
- WO-A-96/19352
- US-A- 3 982 744
- US-A- 4 022 455
- US-A- 5 417 535
- US-A1- 2002 061 238
- US-A1- 2004 188 910

## Description

### BACKGROUND OF THE INVENTION

### 1. Technical Field

The present invention relates generally to book printing, and more particularly to a system for and a method of producing a book on demand.

### 2. Description of the Related Art

Typically a book comprises a plurality of text pages stacked one upon the other (referred to as book block) and a cover overlying the front, back and spine of the book block. The book block is typically printed in black and white, whereas the cover is typically printed in color and on paper which may be thicker or of higher quality.

Books are generally mass produced by offset printing to ensure cheap manufacture and, after distribution all over the world, general accessibility. This traditional method requires the publishing industry to print a large number of copies (at least several hundreds, generally thousands), and, after the books are produced, to store, distribute and sell them to retailers. During production, the components like the book block and cover are produced separately off-line and joined later. To make up for later production imperfections, the printing house produces not only the required numbers of components, but also excess components. For example, to produce 1000 complete books the printing house may print 1200 book blocks and 1300 covers. Consequently, at least a part of these excess components go to waste. Furthermore, since the demand for a book is very hard to estimate, large numbers of books, typically up to 40%, go to waste when they are not sold. Production, storage and disposal of these excess books not only affect the price of the finished product but also burden the environment. Further disadvantages are the slowness of the supply chain, which usually comprises a retail store, and the impossibility of procuring a book not in print anymore and thus unavailable.

In recent years, book printing has undergone changes as computer technology and laser printers have advanced. This new technology allows for machines capable of printing books with lower numbers of copies "on demand". So far, book blocks and covers are produced separately and manually inserted into a binder for binding. Quality control is performed by visual inspection, when the operator inserts the covers and book blocks into the binder. Due to the manual handling of the components, low numbers of copies (down to one single copy) cannot be produced economically.

International patent application WO 92/02888 discloses a system and a method of manufacturing a single book copy, which is especially adapted for direct consumer sales, since the manufacture of a selected book can take place at the point of sale. The apparatus comprises a computer storage of the text, the color graphic cover and sales information for a large number of books. A computer module permits the consumer to scan the sales information and select a book to be purchased. Upon command, the system automatically prints the text and color cover of the selected book, cuts the pages to a predetermined size and binds the pages and cover together while the customer waits.

Another system and method for printing a book on demand is known from U.S. published patent application 20020061238 A1. The apparatus includes one or more text page printers and a color cover printer. The text page printers print the text pages and form them into a book block. The color printer prints the cover. The book block and the cover are delivered to a binding station at which the spine of the book is adhesively bound to the cover. The book is then delivered to a trimming station where excess margins are trimmed from the book. All transfers are accomplished with a carriage which moves along a linear work path.

These known systems are optimized for low production rates, especially for manufacture at the place of sale. Since they are "in-line systems" they are only capable of manufacturing one book at a time. This means printing and binding of the book block and the cover must completed before the system is ready for the next job. High down-times of the different units (printing, binding) of the known systems are accepted. The known systems are thus not suited to replace the conventional book factories efficiently and economically. Nor are they equally suited for efficient production of high numbers of copies, as well as efficient production of a lower number of copies, such as a single copy.

WO 96/19352 discloses a selective flexographic printing process, in which a web of paper is printed with selective non-variable and variable information using a number of flexographic print units, in which data read from a data source by a first computer is used to control printing of variable information on the paper web, the flexographic printing units being independently controlled by a second computer to operatively engage and disengage the paper web and thereby print non-variable information from at least one of the flexographic units on each discrete document portion of the paper web.

A system for manufacturing a book on demand is disclosed in EP1074397A1.

### SUMMARY OF THE INVENTION

A first aspect of the present invention provides a system according to claim 1 for manufacturing a book on demand. The system may further comprise a binding station for binding the first component and the second component together. The computer control system preferably receives or has (in a memory unit) information relating to the book to be manufactured, the information comprising information relating to the content of the first or second component and information relating to the finished size of the book.

The computer control system initiates - among other functions - manufacture of the first component by the first printing unit, receives from the first printing unit the triggering signal and, after receipt of this signal, initiates printing of the second component by the second printing unit. In other words, the printing of the first component is the leading (master) process and the printing of the second component is the following (slave) process, which is initiated only after the master process is successfully completed or at least partly completed. The advantage of this hierarchy is that the process which is more time consuming and/or sensitive with respect to disturbances and/or more expensive can control the over-all process. Rejects of completed books not fulfilling the quality criteria are minimized, since the quality of the first component is controlled prior to manufacture of the second component. The requirement to store the second component until the first component is ready can also be avoided, though buffering the second component is possible.

In one embodiment, the leading "master" first component is a cover and the following "slave" second component is a book block, since production of a cover is ordinarily considered more demanding. However, the role of the "master" and the "slave" component may by reversed.

A second aspect of the present invention provides a method according to claim 19 of manufacturing a plurality of books on demand.

A plurality of books can thus be manufactured one after the other while the different processes run in parallel (i.e. for the manufacture of three books, the following processes run in parallel: printing 3^{rd} cover, printing 2^{nd} text block, binding 1^{st} book), thereby reducing down-times of the processing units (printing, binding etc.).

In all the described embodiments, the printing units or manufacturing units can comprise one or more printers each. In the case of one printer, this printer receives an order (job) relating to a first or second component of a book to be printed, and prints this component subsequently. If the component has more than one page, all required pages are printed sequentially one after the other, or, depending on the format, also side by side on a continuous paper web. The printer is then ready for printing a component of the next book. All components of different books (which may have an identical or different content) to be manufactured are printed sequentially one after the other. For the first component, the order of printing may correspond to the order of entry of the corresponding order to manufacture a book into the present system. If the printing of the first component fails for some reason, the corresponding printing job is entered again into the first printing/manufacturing unit, i.e. into a first waiting list. The order of printing of the second components corresponds to the order of completion of first components. If the printing of a second component fails for some reason, the corresponding printing job is entered again into the second printing/manufacturing unit (i.e. into a second waiting list).

The same process applies generally if the first or second printing/manufacturing unit comprise more than one printer. The printers work in parallel, which means that a first printer prints a first job of a first waiting list while a second printer prints a subsequent second job of the first waiting list, and so on. It is also possible to split up a job between different printers in order to save time especially with components having a high number of pages.

The first printing unit may comprise one or more printers, such as one or more color printers, preferably digital laser printers, for printing the cover. It may further comprise further units for finishing the cover, such as a laminating and/or coating unit. The second printing unit may also comprise one or more printers for printing the book block, either black and white or color digital laser printers. It may further comprise a cutter to cut a continuous web into single sheets and for forming a book block from single sheets, such as a jogger device. Alternatively, the printer may be a single sheet printer, or signatures can be formed by folding a continuous web and then forming them into book blocks.

The present invention allows for the manufacture of a plurality of books in a fully automated way. Contrary to the prior art "on demand" book manufacturing apparatuses, the present invention employs production units suited for mass production volumes, and combines them in a novel and unique way. Down-times of the production units of the system as well as rejects can be minimized, and a high production rate and a high quality of the books can be achieved. Transfer of the components and the finished books between the production units can be fully automatic. Since the components of one book are produced "online" and in dependence on each other, the manufacture of excess components is advantageously avoided, contrary to prior art book factories, where a higher number of components is produced off line and joined at a later production stage.

The present invention thus enables realisation of a fully automated book factory, which is able to replace the traditional book factories, while still allowing the production of a flexible number of copies of a book, even down to a single copy.

### BRIEF DESCRIPTION OF THE DRAWINGS

The present invention will be readily understood by the following detailed description in conjunction with the accompanying drawings, wherein like reference numerals designate like structural elements, and in which:
Fig. 1 is a flow chart of a general method for manufacturing books;
Fig. 2 is a schematic depicting different manufacturing stations of an automated book factory according to on embodiment of the present invention;
Figs. 3 and 4 are schematics depicting two different systems for manufacturing books with a first manufacturing unit, a second manufacturing unit, a binding unit, a trimming unit and a random access storage for storing book components;
Fig. 5 is a flow chart of a process "Cover Printing" as shown in Fig. 1;
Fig. 6 is a flow chart of a process "Text Printing" as shown in Fig. 1; and
Fig. 7 is a flow chart of a process "Binding" as shown in Fig. 1.

### DETAILED DESCRIPTION OF THE INVENTION

The following description is provided to enable any person skilled in the art to make and use the invention and sets forth the best modes contemplated by the inventor for carrying out the invention. Various modifications, however, will remain readily apparent to those skilled in the art. Any and all such modifications, equivalents and alternatives are intended to fall within the spirit and scope of the present invention.

In general, according to a first embodiment of the present invention, a system for manufacturing a book on demand comprises a first printing unit for printing a first component of the book (i.e. a cover), a second printing unit for printing a second component of the book (i.e. a text block), and a computer control system which initiates printing of the second component only after receipt of a triggering signal, which is preferably a signal that the manufacture of the first component is successful. The system may further comprise a binding station for binding the first component and the second component together. The computer control system preferably receives or has (in a memory unit) information relating to the book to be manufactured, the information comprising information relating to the content of the first or second component and information relating to the finished size of the book.

The computer control system initiates - among other functions - manufacture of the first component by the first printing unit, receives from the first printing unit the triggering signal and, after receipt of this signal, initiates printing of the second component by the second printing unit. In other words, the printing of the first component is the leading (master) process and the printing of the second component is the following (slave) process, which is initiated only after the master process is successfully completed or at least partly completed. The advantage of this hierarchy is that the process which is more time consuming and/or sensitive with respect to disturbances and/or more expensive can control the over-all process. Rejects of completed books not fulfilling the quality criteria are minimized, since the quality of the first component is controlled prior to manufacture of the second component. The requirement to store the second component until the first component is ready can also be avoided, though buffering the second component is possible.

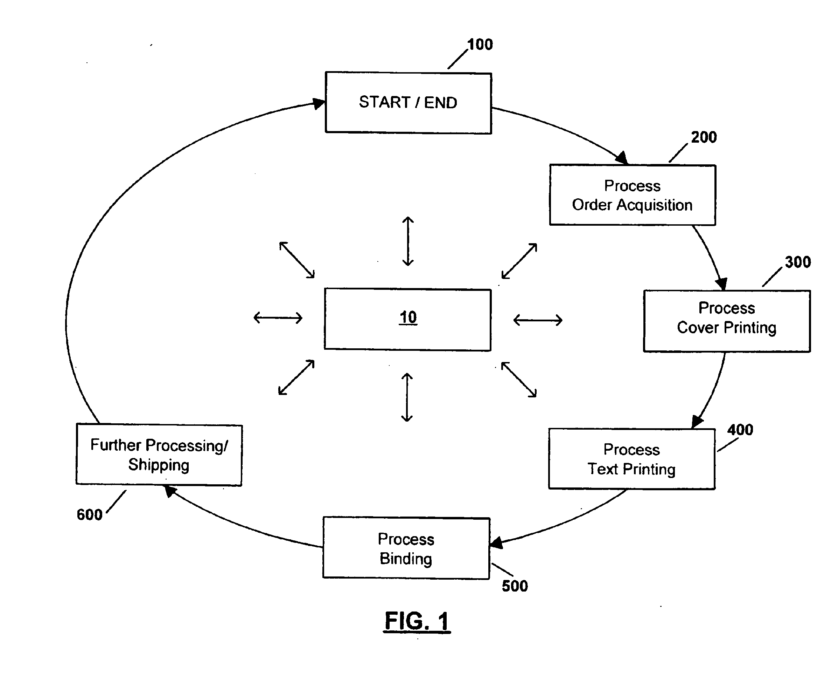

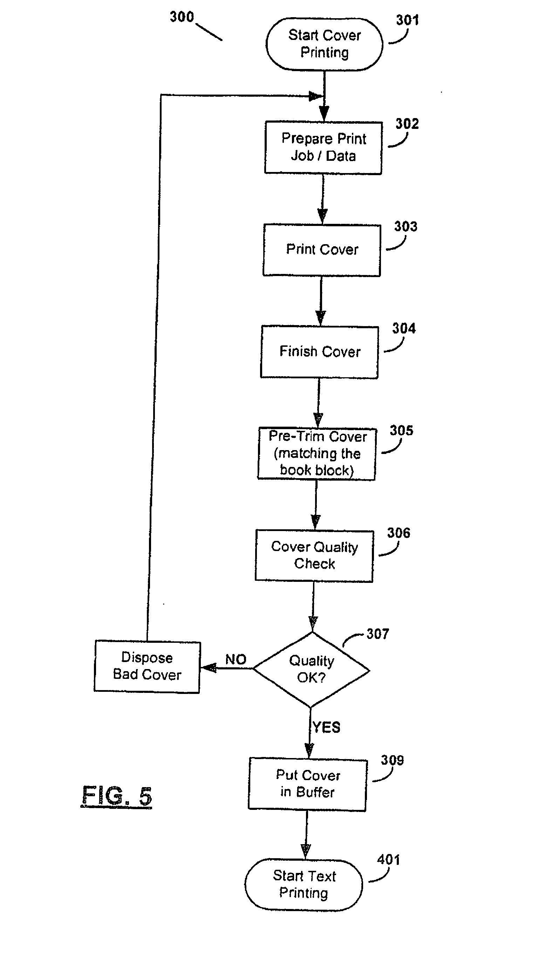

Fig. 1 is a flow chart of a method for manufacturing books which is consistent with the present invention. Each book to be manufactured sequentially runs through the following processes: "Order Acquisition" **200,** "Cover Printing" **300,** "Text Printing" **400,** "Binding" **500,** and "Further Processing and Shipping" **600.** The processes **300, 400, 500** are described below in detail with reference to Figs. 5-7. Reference numeral **100** designates a start and an end of the overall process. The whole sequence of processes is repeated continuously until all book orders completed. It is possible and preferred that processes belonging to different books run in parallel to ensure maximum efficiency of the complete system. Thus, maximum production rates and minimum down-times of the different stations independent of the numbers of copies (number of identical books) are achieved.

A computer control system **10** initiates and controls all processes. The flow of information between the computer control system **10** and the different processes and the respective units carrying out these processes is schematically indicated by double arrows.

In this embodiment, the process "Text Printing" **400** is initiated only after completion of the previous process "Cover Printing" **300.** This means, that in this case the process "Cover Printing" **300** is the master process and the cover can be identified with the first component. Correspondingly, the process "Text Printing" **400** is the slave process and the book block can be identified with the second component.

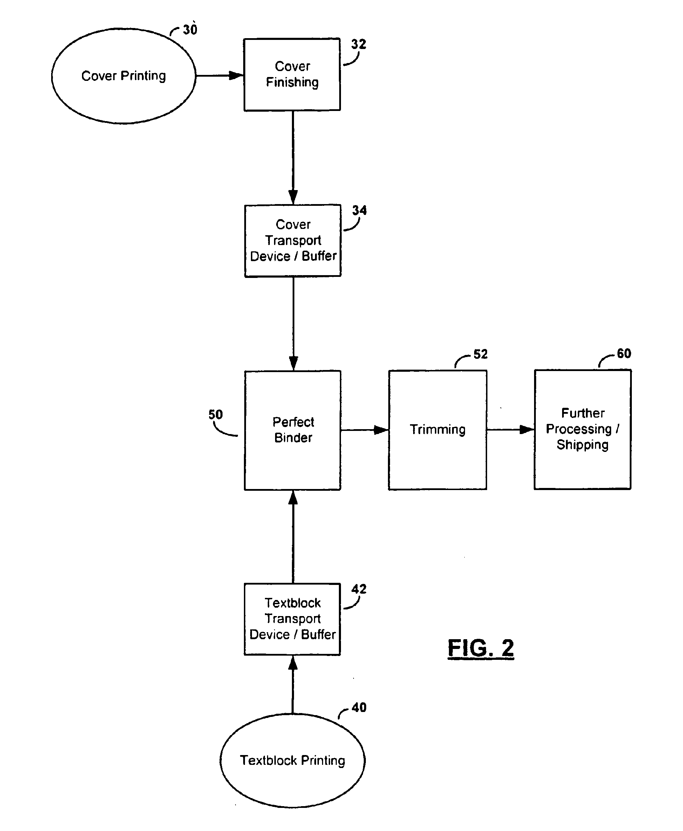

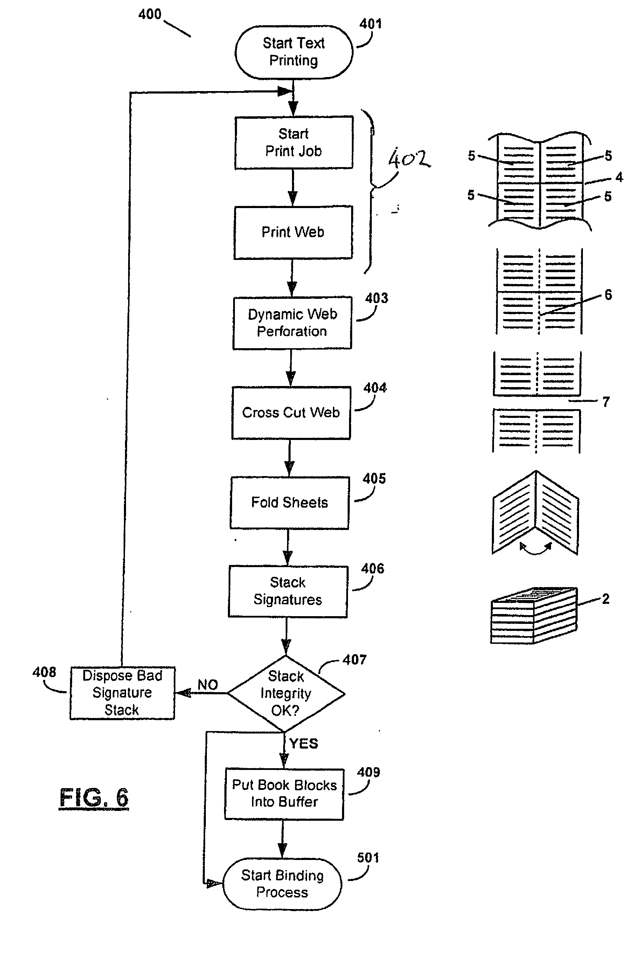

Fig. 2 shows different manufacturing units of an automated book factory according to the invention as well as the material flow between these units. Covers belonging to one or more books are printed in a first printing unit **30,** here a cover printing unit **30** with at least one color printer. The printed covers are then transferred to a finishing unit **32,** preferably a laminating unit for laminating the printed cover. The quality of the printed and laminated covers is controlled (as described below with reference to Fig. 6), and if the quality is acceptable, the cover enters a transfer unit **34.** This transfer unit **34** has a double function. First, it serves to transfer the cover to a binding station **50.** Second, it serves as a buffer or storage to store the cover until a book block matching this cover is ready for binding. As described in more detail below with reference to Figs. 5 and 6, the manufacture of the book block is initiated only after the manufacture of the cover is completed.

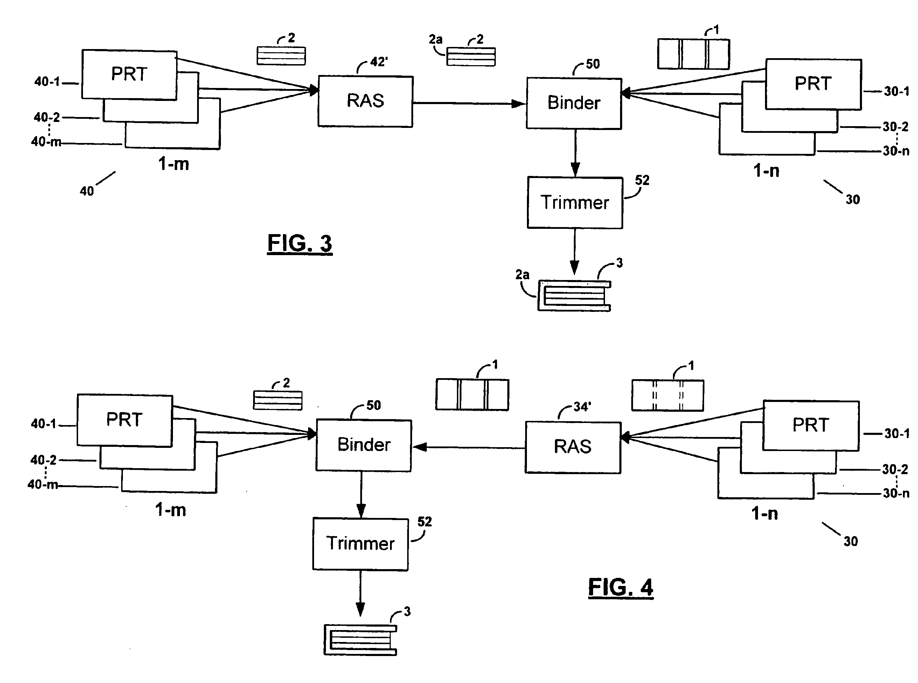

As shown in Fig. 4, which shows a slightly different embodiment of the inventive system, a storage unit **34'** is preferably a random access storage unit (RAS). This means that components such as covers or book blocks can be extracted from the storage independent of the order of their entry. The RAS may be represented by a plurality of one-item-storage elements, i.e. bags or trays, which are stationary or circled along a closed path of movement. The storage unit and its one-item-storage elements, respectively, can be accessed in a fully automated way. The computer control system of the inventive system is therefore preferably able to track all components in the system. This enables the control to know the absolute or relative position of each component in order to match together the cover and book block of each particular book. Tracking can be done purely electronically and/or by means of physical labels applied to the book components, i.e. bar codes, transponders, etc. which are read by appropriate reading device.

Turning back to Fig, 2, a second printing unit **40** is used for printing book blocks. These book blocks are transferred to the binding station **50** via a transfer unit **42.** This transfer unit **34,** may also have a buffering storage function. In this case, a first-in-first-out function is sufficient. Transfer unit **42** may be implemented by a conventional band or gripper conveyor.

Covers and book blocks are automatically delivered to the binding station **50,** where they are bound together, preferably with an adhesive. The bound components are then transferred to a trimming unit **52,** where excess margins are cut, such that a perfect bound book is formed. The book is then transferred to a processing unit **60** for further processing and shipping.

As explained below with reference to Figs. 3 and 4, only one of the transfer units **34** and **42** of Fig. 2 needs to have buffer/storage function to ensure maximum utilization of the printing units **30, 40.** It is however preferred that both transfer units include a storage capacity as this has further benefits with respect to the down-times of the preceding stations. In particular, the printing units **30, 40** do not have to be stopped when the binding station **50** undergoes maintenance if there is a storage with sufficient capacity between each of the printing units **30, 40** and binding station **50.**

Figs. 3 and 4 show two principal embodiments of the inventive system. The system comprises a first printing unit **30,** which comprises a plurality of printers for printing covers **1** (i.e. n printers **30-1, 30-2,... 30-n**). The system further comprises a second printing unit **40** for printing book blocks 2, which comprises a plurality of printers (i.e. m printers **40-1, 40-2,** ... **40-m**). The numbers of the printers depend on their capacity. For example, there could be more text printers than cover printers, if the printing of a text generally takes longer than production of a cover. Both embodiments further comprise a binding station **50** and a trimming station **52.** These stations **50, 52** may also comprise multiple trimmers/binders. The completed book **3** with the cover **1** wrapped around the book block **2** and bound to the spine **2a** of the book block **2** is schematically shown at the exit of the trimming station **52.**

Fig. 4 generally corresponds to the embodiment shown in Fig. **2** with the cover **1** being the leading (first) component and the book block **2** being the following (second) component. Consequently, as the cover **1** waits for the production of its associated book block **2,** the cover **1** is transferred to a random access storage (RAS) **34,** which may separate from or integrated into the transfer unit (not shown) for transferring the cover **1** to the binding station **50.** The book block **2** is directly transferred to the binding station **50.**

Fig. 3 corresponds to an embodiment of the inventive system in which the book block **2** is the leading (first) component, and the cover **1** is the following (second) component. Here, the book blocks **2** are stored in a RAS **42'** until printing (and if applicable further finishing actions like laminating) of the cover 1 is completed.

Fig. 5 illustrates the cover printing process **300.** After the start of the cover printing **301,** the data is prepared for printing and the corresponding print job is sent to the cover printing unit **30,** i.e. to one of the available printers **30-1, 30-2, ... 30-n** shown in Fig. 3 or 4. If all the printers are busy, the print job is entered into a waiting list of the printing unit **30.** The next sub-processes are printing the cover **303** and finishing the cover **304** (i.e. laminating). To match the book block, the cover may also be pre-trimmed (step **305**). The quality of the cover is then checked by a quality check unit, which also works fully automatically (step **306/307**). If the quality is not sufficient, the steps **302-306** are repeated, and the bad cover is discarded. If the quality is sufficient, the cover is transferred to the buffer (step **309**), and the printing of the text (book block) is initiated (step **401**). In further detail, the computer control system receives a signal regarding to the quality of the cover and sends a corresponding signal/order to the text printing unit **40.** Cover printing **300** may also include a step (not shown), in which a label is applied to the cover, which enables tracing and matching the components at a later stage.

Fig. 6 shows the book block printing process **400.** It also shows schematically the book block **2** in different stages of its production. After initiating the printing process (step **401**), the print job is started by transferring the print data to the book block printing unit **40** (step **402**). The job is entered into a waiting list, if the printing unit **40** is not yet ready for printing. Since a book block generally comprises a plurality of pages, it is preferable to print the pages **5** one after the other on a continuous paper web **4** (step **402**). If the format of the pages and the web allows for it, the pages **5** can also be printed side by side on the web **4.** The web **4** is then perforated in a longitudinal direction to facilitate folding the web or separating the pages from each other (step **403,** perforation **6**). To form separate sheets, the web is subsequently cut transversely (transverse cut **7**), using a cross cutting unit (step **404**). The sheets are folded and stacked to form a signature book block **2** (steps **405, 406**). Next, the stack integrity is checked (step **407**). If the quality of the stack is rejected, the stack is discarded and the printing (steps **402-406**) repeated (step **408**). If the stack fulfills the requirements, the book block is transferred directly to the binding station **50,** and put into a buffer if the binding station **50** is not yet ready (step **409**). The binding process starts as soon as the binding station is ready (step **501**).

It is also possible to print the pages on single sheets. In this case, the step **402** is "print on sheets", and steps **403, 404** can be dropped. If the sheets do not require folding, step **405** can be dropped in both cases.

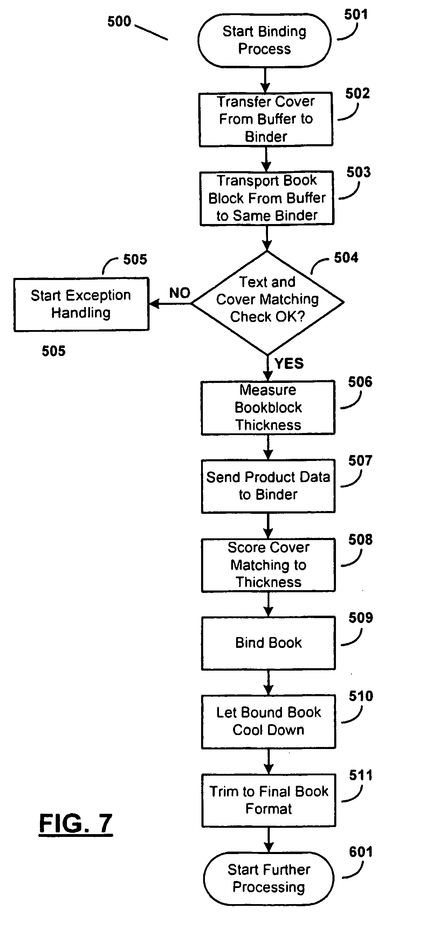

Fig. 7 shows the binding process **500.** After initiation of the binding process (step **501**), the cover and book block are transferred to the binding unit **50** (**steps 502, 503**). If the binding unit has more than one binder, the components are transferred to the same binder. Step **503** is shown here to follow step **502,** but it is also possible to reverse the order, i.e. have the cover follow the book block. The latter is especially advantageous if there is only a buffer for the covers whereas the book blocks are transferred directly to the binding unit. In step **504** it is checked whether text and cover match, i.e. by automatically comparing labels previously applied to both components. If the components do not match, exception handling is started (step **505**). If they match, the binding process continues with measuring the thickness of the book block (step **506**), sending product data to the binder (step **507**), scoring the cover matching to the thickness (step **508**), binding the components together, especially by applying a hot melt adhesive (step **509**), letting to book cool down (step **510**) and trimming it to the final book format (step **511**). Any further processing/shipment can then be started (step **601**). Generally, all known binding techniques can be employed.
All actions described with respect to Fig. 5-7 are performed under the control of the computer control system **10.** The computer control system **10** may be represented by a central computer or represented by a plurality of decentralized control units, i.e. control units belonging to the different units.

A further embodiment of the present invention concerns manufacturing a plurality of books on demand, which may be of a different size and have a different content, each of the books comprising at least a first component and a second component. The method includes introducing a first component of a first book, initiating the production of a second component of the first book after receipt of a signal that the production of the first component of the first book is successful, and producing the second component of the first book, producing a first component of a further book after completion of the production of the first component of the first book, and producing a second component of a further book after completion of the production of the second component of the first book. A plurality of books can thus be manufactured one after the other while the different processes run in parallel (i.e. for the manufacture of three books, the following processes run in parallel: printing 3^{rd} cover, printing 2^{nd} text block, binding 1^{st} book), thereby reducing down-times of the processing units (printing, binding etc.).

The invention concerns a closed system for manufacturing books. Book components as well as finished books are produced and handled fully automatically without manual intervention. They do not leave the system until the book is ready for shipment, with the exception of components not fulfilling predetermined quality requirements. The production of excess components is avoided, as only the components actually needed are produced. Those skilled in the art will appreciate that various adaptations and modifications of the just-described preferred embodiments can be configured without departing from the scope of the invention

## Claims

1. A system for manufacturing a book on demand, the book (3) comprising at least a first component (1) and a second component (2), the system comprising:
a first printing unit (30) for printing the first component (1) of the book (3);
a second printing unit (40) for printing the second component (2) of the book (3);
a computer control system (10) arranged to initiate printing of the first component (1) by the first printing unit (30), receive a triggering signal and, after receipt of this triggering signal, initiate printing of the second component (2) by the second printing unit (40); and
a first buffer unit (34) for buffering at least the first component (1) at least until a corresponding second component (2) is ready for binding;
wherein the first printing unit (30) generates the triggering signal which indicates a status of the first component (1) and sends this triggering signal to the computer control system (10); and
wherein, for producing a plurality of identical and/or different books, the first printing unit (30) is capable of printing a plurality of first components (1) and the second printing unit (40) is capable of printing a plurality of second components (2) such that the first and second printing units (30, 40) operate in parallel, the order of printing of the plurality of second components (2) corresponding to the order of completion of the plurality of first components (1).

2. A system according to claim 1, further comprising a binding station (50) for binding the first component (1) and the second component (2) together.

3. A system according to claim 2, further comprising a first transfer unit (34) for transferring the first component to the binding station (50);
a second transfer unit (42) for transferring the second component to the binding station (50).

4. A system according to claim 2, wherein the computer control system (10) is arranged to effect transfer of one of the first component (1) and second component (2) into the binding station (50), upon receipt of information that the binding station (50) is ready for receiving book components for binding, and wherein the computer control system (10) is arranged to effect transfer of the first component (1) into the binding station (50) upon receipt of information regarding a successful positioning of the second component (2) in the binding station (50).

5. A system according to claim 1, wherein the computer control system (10) receives or has information relating to the book (3) to be manufactured, the information comprising information relating to the content of the first or second component (1, 2) and information relating to the finished size of the book (3).

6. A system according to claim 1 wherein;
the first component is a cover (1) and the second component is a book block (2) comprising a plurality of text pages.

7. A system according to claim 1 wherein the first printing unit (30) comprises a cover printing unit and the second printing unit (40) comprises a book printing unit for sequentially printing a plurality of text pages constituting a book block (2).

8. A system according to claim 1 wherein the first printing unit (30) comprises at least one digital cover printer and wherein the second printing unit (40) comprises at least one digital printer for printing a plurality of text pages constituting a book block (2).

9. A system according to claim 1 wherein a or the computer control system (10) tracks each of the first components (1) or second components (2).

10. A system according to claim 1 wherein the first buffer unit (34) is a random access buffer.

11. A system according to claim 1, further comprising a second buffer unit (42) for buffering at least the second component (2) at least until the binding station (50) is ready for binding.

12. A system according to claim 11 wherein the second buffer unit (42) is a first-in- first-out buffer.

13. A system according to claim 1 further comprising a trimming unit (52) for trimming excess margins of the bound book (3) along one or more edges thereof so as to form a book (3) of a predetermined size.

14. A system according to claim 1 further comprising a laminating unit (60) for laminating the first component (1) and/or a coating unit or varnishing unit for coating the first component (1).

15. A system according to claim 1 further comprising a quality control unit which controls the quality of the first component (1) and generates a signal containing information that the production of the first component (1) is successful and sends this signal to the computer control system (10).

16. A system according to claim 1 wherein the status of the first component (1) is a partial completion status.

17. A system according to claim wherein the status of the first component (1) is a completion status.

18. A system according to claim 1 wherein the second component (2) is cover and the first component (1) is a book block comprising a plurality of text pages.

19. A method of manufacturing a plurality of books on demand, which may be of a different size and have a different content, each of the books (3) comprising at least a first component (1) and a second component (2), the method comprising:
producing (300) a first component (1) of a first book (3);
initiating a production (400)of a second component (2) of the first book (3) after receipt of a triggering signal, and producing the second component (2) of the first book (3);
binding (500) the first component (1) of the first book (3) and the second component (2) of the first book (3) together, producing a first component (1) of a further book (3) after completion of the production of the first component (1) of the first book (3); and
producing a second component (2) of the further book (3) after completion of the production of the second component (2) of the first book (3);
wherein the first and second components (1, 2) of the first book (3) and the first and second components (1, 2) of the further book (3) are produced by first and second printing units (30, 40) operating in parallel, the order of printing of the second components (2) corresponding to the order of completion of the first components (1).

20. A method according to claim 19 where the triggering signal is a signal that the production of the first component (1) is successful.

21. A method according to claim 19, further comprising binding the first component (1) and the second component (2) together with an adhesive.

22. A method according to claim 19, further comprising transferring (309) the first component (1) of the first book (3) to a first buffer (34); and transferring (309) the first component (1) of the further book (3) to the first buffer (34).

23. A method according to claim 19, further comprising transferring (502) the first component (1) of the first or the further book (3) from the first buffer (34) to a binding station (50) upon receipt of a signal that the second component (2) belonging to the first or the further book (3) is ready for binding.

24. A method according to claim 19, further comprising producing the first components (1) of the first book and the further books (3) sequentially one after the other or in a parallel manner; and
producing the second components (2) of the first book and the further books (3) sequentially one after the other or in a parallel manner, in order of the completion of the first components (1).

25. A method according to claim 19, wherein the first component (1) is a cover and the second component (2) is a text block of a book (3) to be manufactured.

26. A method according to claim 19, further comprising controlling (307) the quality of the first component (1) and generating and sending a signal to the computer control system (10) that the quality of the first component (1) is satisfactory.

27. A method according to claim 19, further comprising transferring (309) the first component (1) of the book (3) to a first buffer (34).

28. A method according to claim 27, further comprising transferring (502) the first component (1) of the book (3) from the first buffer (34) to the binding station (50) upon receipt of a signal that the second component (2) associated with the first component (1) is ready for binding.

## Patentansprüche

1. Ein System zur Herstellung eines Buches auf Anfrage, wobei das Buch (3) sich zumindest aus einer ersten Komponente (1) und einer zweiten Komponente (2) zusammensetzt, wobei das System Folgendes umfasst:
eine erste Druckeinheit (30) zum Drucken der ersten Komponente (1) des Buchs (3);
eine zweite Druckeinheit (40) zum Drucken der zweiten Komponente (2) des Buchs (3);
ein Computersteuersystem (10), das so angeordnet ist, dass es das Drucken der ersten Komponente (1) durch die erste Druckeinheit (30) einleitet, ein Auslösesignal empfängt und nach Erhalt des Auslösesignals das Drucken der zweiten Komponente (2) durch die zweite Druckeinheit (40) einleitet; und
eine erste Puffereinheit (34) zur Pufferung von zumindest der ersten Komponente (1) zumindest bis eine entsprechende zweite Komponente (2) zum Binden fertig ist;
wobei die erste Druckeinheit (30) das Auslösesignal erstellt, das den Status der ersten Komponente (1) anzeigt, und dieses Auslösesignal an das Computersteuersystem (10) sendet; und
wobei zur Herstellung einer Reihe identischer und/oder unterschiedlicher Bücher die erste Druckeinheit (30) in der Lage ist, eine Reihe erster Komponenten (1) zu drucken, und die zweite Druckeinheit (40) in der Lage ist, eine Reihe zweiter Komponenten (2) zu drucken, so dass die erste und die zweite Druckeinheit (30, 40) parallel operieren, wobei die Reihenfolge des Druckens der Reihe zweiter Komponenten (2) der Reihenfolge der Fertigstellung der Reihe erster Komponenten (1) entspricht.

2. Ein System entsprechend Anspruch 1, zu dem weiterhin eine Bindestation (50) zum Zusammenbinden der ersten Komponente (1) und der zweiten Komponente (2) gehört.

3. Ein System entsprechend Anspruch 2, zu dem weiterhin eine erste Übergabeeinheit (34) zur Übergabe der ersten Komponente an die Bindestation (50) und eine zweite Übergabeeinheit (42) zur Übergabe der zweiten Komponente (2) an die Bindestation (50 gehören.

4. Ein System entsprechend Anspruch 2, wobei das Computersteuersystem (10) so angeordnet ist, dass es die Übergabe von entweder der ersten Komponente (1) oder der zweiten Komponente (2) in die Bindestation (50) bewirkt, wenn es Information erhalten hat, dass die Bindestation (50) zum Empfang der Buchkomponenten zum Binden bereit ist, und wobei das Computersteuersystem (10) so angeordnet ist, dass es die Übergabe der ersten Komponente (1) in die Bindestation (50) bewirkt, wenn es Information über die erfolgreiche Positionierung der zweiten Komponente (2) in der Bindestation (50) erhält.

5. Ein System entsprechend Anspruch 1, wobei das Computersteuersystem (10) Information empfängt oder hat, die sich auf das herzustellende Buch (3) bezieht, wobei die Information Information über den Inhalt der ersten oder zweiten Komponente (1, 2) und Information über die fertige Größe des Buchs (3) ist.

6. Ein System entsprechend Anspruch 1, wobei:
die erste Komponente ein Einband (1) und die zweite Komponente ein aus einer Reihe von Textseiten bestehender Buchblock (2) ist.

7. Ein System entsprechend Anspruch 1, wobei die erste Druckeinheit (30) eine Einbanddruckeinheit ist und die zweite Druckeinheit (40) eine Druckeinheit zum sequenziellen Drucken einer Reihe von Textseiten, die einen Buchblock (2) ausmachen, ist.

8. Ein System entsprechend Anspruch 1, wobei die erste Druckeinheit (30) zumindest einen Digitaleinbanddrucker umfasst und die wobei die zweite Druckeinheit (40) zumindest einen Digitaldrucker zum Drucken einer Reihe von Textseiten, die einen Buchblock (2) ausmachen, umfasst.

9. Ein System entsprechend Anspruch 1, wobei ein oder das Computersteuersystem (10) jede der ersten Komponenten (1) oder zweiten Komponenten (2) verfolgt.

10. Ein System entsprechend Anspruch 1, wobei die erste Puffereinheit (34) ein Puffer mit wahlfreiem Zugriff ist.

11. Ein System entsprechend Anspruch 1, zu dem weiterhin eine zweite Puffereinheit (42) zur Pufferung von zumindest der zweiten Komponente (2), zumindest bis die Bindestation (50) zum Binden bereit ist, gehört.

12. Ein System entsprechend Anspruch 11, wobei die zweite Puffereinheit (42) ein Puffer auf First-in-First-out-Basis ist.

13. Ein System entsprechend Anspruch 1, zu dem weiterhin eine Schneideinheit (52) zum Abschneiden von überschüssigen Rändern des gebundenen Buches (3) entlang einer oder mehrerer Kanten gehört, damit ein Buch (3) einer vorbestimmten Größe entsteht.

14. Ein System entsprechend Anspruch 1, zu dem weiterhin ein Laminator (60) zum Laminieren der ersten Komponente (1) und/oder eine Beschichtungseinheit oder Lackiereinheit zur Beschichtung der ersten Komponente (1) gehören.

15. Ein System entsprechend Anspruch 1, zu dem weiterhin eine Qualitätskontrolleinheit gehört, welche die Qualität der ersten Komponente (1) kontrolliert und ein Signal erzeugt, das Information enthält, dass die Herstellung der ersten Komponente (1) erfolgreich ist, und dieses Signal an das Computersteuersystem (10) sendet.

16. Ein System entsprechend Anspruch 1, wobei der Status der ersten Komponenten (1) ein teilweiser Abschlussstatus ist.

17. Ein System entsprechend Anspruch 1, wobei der Status der ersten Komponenten (1) ein Abschlussstatus ist.

18. Ein System entsprechend Anspruch 1, wobei die zweite Komponente (2) der Einband ist und die erste Komponente (1) ein aus einer Reihe von Textseiten bestehender Buchblock ist.

19. Ein Verfahren zur Herstellung einer Reihe von Büchern auf Anfrage, die unterschiedliche Größe und unterschiedlichen Inhalt haben können, wobei sich jedes der Bücher (3) zumindest aus einer ersten Komponente (1) und einer zweiten Komponente (2) zusammensetzt, wobei das Verfahren aus Folgenden besteht:
Herstellen (300) einer ersten Komponente (1) eines ersten Buches (3);
Einleiten einer Herstellung (400) einer zweiten Komponente (2) des ersten Buches (3) nach Erhalt eines Auslösesignals und Herstellung der zweiten Komponente (2) des ersten Buches (3);
Binden (500) der ersten Komponente (1) des ersten Buches (3) und der zweiten Komponente (2) des ersten Buches (3), Herstellen einer ersten Komponente (1) eines weiteren Buches (3) nach Fertigstellung der Herstellung der ersten Komponente (1) des ersten Buches (3); und
Herstellen einer zweiten Komponente (2) des weiteren Buches (3) nach Fertigstellung der Herstellung der zweiten Komponente (2) des ersten Buches (3);
wobei die ersten und zweiten Komponenten (1, 2) des ersten Buches (3) und die ersten und zweiten Komponenten (1, 2) des weiteren Buches (3) von ersten und zweiten Druckeinheiten (30, 40), die parallel operieren, hergestellt werden, wobei die Reihenfolge des Druckens der zweiten Komponenten (2) der Reihenfolge der Fertigstellung der ersten Komponenten (1) entspricht.

20. Ein Verfahren entsprechend Anspruch 19, wobei das Auslösesignal ein Signal ist, dass die Herstellung der ersten Komponente (1) erfolgreich ist.

21. Ein Verfahren entsprechend Anspruch 19, zu dem weiterhin das Binden der ersten Komponente (1) und der zweiten Komponente (2) mit einem Klebstoff gehört.

22. Ein Verfahren entsprechend Anspruch 19, zu dem weiterhin die Übergabe (309) der ersten Komponente (1) des ersten Buches (3) an einen ersten Puffer (34) und die Übergabe (309) der ersten Komponente (1) des weiteren Buches (3) an den ersten Puffer (34) gehört.

23. Ein Verfahren entsprechend Anspruch 19, zu dem weiterhin die Übergabe (502) der ersten Komponente (1) des ersten oder des weiteren Buches (3) vom ersten Puffer (34) an eine Bindestation (50) gehört, wenn ein Signal erhalten wird, dass die zweite Komponente (2), die zum ersten oder weiteren Buch (3) gehört, zum Binden fertig ist.

24. Ein Verfahren entsprechend Anspruch 19, zu dem weiterhin das Herstellen erster Komponenten (1) des ersten Buches und der weiteren Bücher (3) sequentiell einer nach der anderen oder in parallel gehört; und
Herstellen der zweiten Komponenten (2) des ersten Buchs und der weiteren Bücher (3) sequentiell einer nach der anderen oder in parallel in der Reihenfolge der Fertigstellung der ersten Komponenten (1).

25. Ein Verfahren entsprechend Anspruch 19, wobei die erste Komponente (1) ein Einband ist und die zweite Komponente (2) eine Textblock eines herzustellenden Buches (3) ist.

26. Ein Verfahren entsprechend Anspruch 19, zu dem weiterhin die Kontrolle (307) der Qualität der ersten Komponente (1) und Erzeugen und Senden eines Signals an das Computersteuersystem (10), dass die Qualität der ersten Komponente (1) zufriedenstellend ist, gehören.

27. Ein Verfahren entsprechend Anspruch 19, zu dem weiterhin die Übergabe (309) der ersten Komponente (1) des Buches an einen ersten Puffer (34) gehört.

28. Ein Verfahren entsprechend Anspruch 27, zu dem weiterhin die Übergabe (502) der ersten Komponente (1) des Buches (3) vom ersten Puffer (34) an die Bindestation (50) gehört, nachdem ein Signal erhalten wurde, dass die zweite Komponente (2), die mit der ersten Komponente (1) assoziiert ist, zum Binden fertig ist.

## Revendications

1. Un système de fabrication d'un livre à la demande, le livre (3) comprenant au moins un premier composant (1) et un deuxième composant (2), le système comprenant :
une première unité d'impression (30) destinée à imprimer le premier composant (1) du livre (3),
une deuxième unité d'impression (40) destinée à imprimer le deuxième composant (2) du livre (3),
un système de commande informatique (10) agencé de façon à lancer l'impression du premier composant (1) par la première unité d'impression (30), à recevoir un signal de déclenchement et, après la réception de ce signal de déclenchement, à lancer l'impression du deuxième composant (2) par la deuxième unité d'impression (40), et
une première unité tampon (34) destinée à placer en zone tampon au moins le premier composant (1) au moins jusqu'à ce qu'un deuxième composant correspondant (2) soit prêt pour la reliure,
où la première unité d'impression (30) génère le signal de déclenchement qui indique un état du premier composant (1) et envoie ce signal de déclenchement au système de commande informatique (10), et
où, afin de produire une pluralité de livres différents et/ou identiques, la première unité d'impression (30) est capable d'imprimer une pluralité de premiers composants (1) et la deuxième unité d'impression (40) est capable d'imprimer une pluralité de deuxièmes composants (2) de sorte que les première et deuxième unités d'impression (30, 40) fonctionnent en parallèle, l'ordre d'impression de la pluralité de deuxièmes composants (2) correspondant à l'ordre d'achèvement de la pluralité de premiers composants (1).

2. Un système selon la Revendication 1, comprenant en outre une station de reliure (50) destinée à relier ensemble le premier composant (1) et le deuxième composant (2).

3. Un système selon la Revendication 2, comprenant en outre une première unité de transfert (34) destinée à transférer le premier composant vers la station de reliure (50),
une deuxième unité de transfert (42) destinée à transférer le deuxième composant vers la station de reliure (50).

4. Un système selon la Revendication 2, où le système de commande informatique (10) est agencé de façon à effectuer le transfert d'un composant parmi le premier composant (1) et le deuxième composant (2) vers la station de reliure (50) après réception d'une information selon laquelle la station de reliure (50) est prête à recevoir des composants de livre à relier, et où le système de commande informatique (10) est agencé de façon à effectuer le transfert du premier composant (1) vers la station de reliure (50) après réception d'une information relative à un positionnement réussi du deuxième composant (2) dans la station de reliure (50).

5. Un système selon la Revendication 1, où le système de commande informatique (10) reçoit ou possède des informations relatives au livre (3) à fabriquer, les informations comprenant des informations relatives au contenu du premier ou du deuxième composant (1, 2) et des informations relatives à la taille finale du livre (3).

6. Un système selon la Revendication 1 où
le premier composant est une couverture (1) et le deuxième composant est un corps de livre (2) comprenant une pluralité de pages de texte.

7. Un système selon la Revendication 1 où la première unité d'impression (30) comprend une unité d'impression de couverture et la deuxième unité d'impression (40) comprend une unité d'impression de livre destinée à une impression séquentielle d'une pluralité de pages de texte constituant un corps de livre (2).

8. Un système selon la Revendication 1 où la première unité d'impression (30) comprend au moins une imprimante de couverture numérique et où la deuxième unité d'impression (40) comprend au moins une imprimante numérique destinée à imprimer une pluralité de pages de texte constituant un corps de livre (2).

9. Un système selon la Revendication 1 où un ou le système de commande informatique (10) suit chacun des premiers composants (1) ou des deuxièmes composants (2).

10. Un système selon la Revendication 1 où la première unité tampon (34) est une zone tampon à accès aléatoire.

11. Un système selon la Revendication 1, comprenant en outre une deuxième unité tampon (42) destinée à placer en zone tampon au moins le deuxième composant (2) au moins jusqu'à ce que la station de reliure (50) soit prête pour la reliure.

12. Un système selon la Revendication 11 où la deuxième unité tampon (42) est une zone tampon de type premier entré premier sorti.

13. Un système selon la Revendication 1 comprenant en outre une unité de massicotage (52) destinée à massicoter des marges en excès du livre relié (3) le long d'une ou plusieurs bordures de celui-ci de façon à former un livre (3) d'une taille prédéterminée.

14. Un système selon la Revendication 1 comprenant en outre une unité de plastification (60) destinée à plastifier le premier composant (1) et/ou une unité de couchage ou une unité de vernissage destinée à pelliculer le premier composant (1).

15. Un système selon la Revendication 1 comprenant en outre une unité de contrôle qualité qui contrôle la qualité du premier composant (1) et génère un signal contenant une information selon laquelle la production du premier composant (1) est réussie et envoie ce signal au système de commande informatique (10).

16. Un système selon la Revendication 1 où l'état du premier composant (1) est un état d'achèvement partiel.

17. Un système selon la Revendication 1 où l'état du premier composant (1) est un état d'achèvement.

18. Un système selon la Revendication 1 où le deuxième composant (2) est une couverture et le premier composant (1) est un corps de livre comprenant une pluralité de pages de texte.

19. Un procédé de fabrication d'une pluralité de livres à la demande, qui peuvent être d'une taille différente et posséder un contenu différent, chacun des livres (3) comprenant au moins un premier composant (1) et un deuxième composant (2), le procédé comprenant :
la production (300) d'un premier composant (1) d'un premier livre (3),
la lancement d'une production (400) d'un deuxième composant (2) du premier livre (3) après la réception d'un signal de déclenchement, et la production du deuxième composant (2) du premier livre (3),
la reliure ensemble (500) du premier composant (1) du premier livre (3) et du deuxième composant (2) du premier livre (3), la production d'un premier composant (1) d'un livre suivant (3) après l'achèvement de la production du premier composant (1) du premier livre (3), et
la production d'un deuxième composant (2) du livre suivant (3) après l'achèvement de la production du deuxième composant (2) du premier livre (3),
où les premier et deuxième composants (1, 2) du premier livre (3) et les premier et deuxième composants (1, 2) du livre suivant (3) sont produits par les première et deuxième unités d'impression (30, 40) fonctionnant en parallèle, l'ordre d'impression des deuxièmes composants (2) correspondant à l'ordre d'achèvement des premiers composants (1).

20. Un procédé selon la Revendication 19 où le signal de déclenchement est un signal indiquant que la production du premier composant (1) est réussie.

21. Un procédé selon la Revendication 19, comprenant en outre la reliure ensemble du premier composant (1) et du deuxième composant (2) avec un adhésif.

22. Un procédé selon la Revendication 19, comprenant en outre le transfert (309) du premier composant (1) du premier livre (3) vers une première zone tampon (34), et le transfert (309) du premier composant (1) du livre suivant (3) vers la première zone tampon (34).

23. Un procédé selon la Revendication 19, comprenant en outre le transfert (502) du premier composant (1) du premier livre ou du livre suivant (3) à partir de la première zone tampon (34) vers une station de reliure (50) après réception d'un signal indiquant que le deuxième composant (2) appartenant au premier livre ou au livre suivant (3) est prêt pour la reliure.

24. Un procédé selon la Revendication 19, comprenant en outre la production des premiers composants (1) du premier livre et des livres suivants (3) de manière séquentielle l'un après l'autre ou de manière parallèle, et
la production des deuxièmes composants (2) du premier livre et des livres suivants (3) de manière séquentielle l'un après l'autre ou de manière parallèle dans l'ordre d'achèvement des premiers composants (1).

25. Un procédé selon la Revendication 19, où le premier composant (1) est une couverture et le deuxième composant (2) est un bloc de feuilles composées d'un livre (3) à fabriquer.

26. Un procédé selon la Revendication 19, comprenant en outre le contrôle (307) de la qualité du premier composant (1) et la génération et l'envoi d'un signal au système de commande informatique (10) indiquant que la qualité du premier composant (1) est satisfaisante.

27. Un procédé selon la Revendication 19, comprenant en outre le transfert (309) du premier composant (1) du livre (3) vers une première zone tampon (34).

28. Un procédé selon la Revendication 27, comprenant en outre le transfert (502) du premier composant (1) du livre (3) à partir de la première zone tampon (34) vers la station de reliure (50) après réception d'un signal indiquant que le deuxième composant (2) associé au premier composant (1) est prêt pour la reliure.
